# EUROPEAN PATENT SPECIFICATION

(11) **EP 1 539 653 B1**
(45) Date of publication and mention of the grant of the patent: **21.02.2007**
(21) Application number: 03792882.7
(22) Date of filing: 22.08.2003
(51) Int. Cl.: C04B 28/26

(54) **METHOD OF PREPARING A SILICATE-BASED FOAM, FOAM OBTAINED BY USING SUCH A METHOD AS WELL AS THE USE THEREOF**
VERFAHREN ZUR HERSTELLUNG VON SILIKATSCHAUM, DARAUSHERGESTELLTER SILIKATSCHAUM UND VERWENDUNG DESSELBEN
PROCEDE DE PREPARATION DE MOUSSE A BASE DE SILICATE, MOUSSE OBTENUE AU MOYEN D'UN TEL PROCEDE AINSI QUE SON UTILISATION

(30) Priority: 23.08.2002 NL 1021323
(43) Date of publication of application: 15.06.2005
(73) Proprietor: MODINA B.V., 6222 NE Maastricht (NL)
(72) Inventor: PRICK, Raoul, Guilielmus, Boudewijn, Marie, NL-6226 HA Maastricht (NL)
(74) Representative: Valkonet, Rutger
(86) International application number: PCT/NL2003/000594
(87) International publication number: WO 2004/018382

(56) References cited:
- EP-A- 0 288 106
- DE-A- 3 244 523
- FR-A- 2 130 680
- US-A- 5 714 000
- CHEMICAL ABSTRACTS, vol. 88, no. 2, 9 January 1978 (1978-01-09), Columbus, Ohio, US; abstract no.: 11073u, XP0000063196 & JP 52 078921 A (J.KIMURA) 2 July 1977 (1977-07-02)

## Description

The present invention relates to a method of preparing a silicate-based foam wherein silicate is supplied to a mixer under pressure, to which mixer also a carrier gas is supplied under pressure, with intense mixing of the silicate and the carrier gas being effected in the mixer, after which a foam of carrier gas and silicate is delivered via an outlet opening of the mixer, characterized in that the mixer is tubular and in that the mixer is internally provided with packing materials, which effect an intense mixing of silicate and carrier gas.

The method referred to in the introduction is known per se from US patent No 4, 960, 621, wherein an inorganic, non-combustible foam is applied to a surface to be rendered fire-retardant. The method that is known therefrom comprises the provision of two separate packages, viz. a package comprising about 64% of sodium silicate having an SiO₂/Na₂O ratio of about 2.9, and another package comprising about 8% sodium silico fluoride and about 20% of a filler, after which the contents of the two separate packages are mixed and the mixed contents are applied to said surface, with the obtained mixture having a volume six to ten times that of the added volumes of the packaged contents. One drawback of the method that is known therefrom is the fact that two separate packages are required at all times, with one package comprising a relatively costly filler. In addition, said US patent does not provide any further details with regard to the mixing of the contents of the two separate packages. In addition to that, a foam having a fixed composition is obtained at all times.

U.S. patent No. 5,714,000 relates to a method of making a rigid foam composition by placing three raw material feed streams in appropriate sized tanks or vessels which are connected via piping systems to positive displacement pumps. The reactants are pumped to a continuous, high-speed, high shear mixer, which produces the wet foam dispensed into molds. Compressed air or nitrogen is injected into the mixer at a rate to produce the desired wet foam density.

U.S. patent No. 3,933,514 relates to a composition for producing a silicate foam wherein the ingredients of the recipe are added to a blender with water and mixed in the presence of air, wherein the mixture is agitated until the ingredients are uniformly mixed and begin to react. Agitation of the mixture can be accomplished by pumping gas through the mixture, by circulating fluid through the reaction medium, or by mechanically agitating the mixture. The blowing agent can be incorporated into the mixture as a dissolved or entrained gas or by adding a gas releasing agent to the composition to produce very low density foam.

The object of the present invention is to provide a silicate-based foam, which foam has a short drying time and which can be worked after a short time already.

Another object of the present invention is to provide a method of preparing a silicate-based foam, the nature of said foam being such that the surface to which the form is applied will not undergo any deformation.

Yet another object of the present invention is to provide a foam which significantly reduces the PCS-value, viz. the amount of energy that is released upon combustion, of organic materials for the purpose of rendering organic materials that have been treated with the present foam fire-resistant.

Yet another object of the present invention is to provide a foam which is applied to a surface in such a manner that the foam will not fully penetrate into the object to be impregnated, as a result of which the impregnated object will retain its original, flexible characteristics.

Another object of the present invention is to provide a foam which can be used as an adhesive, with a small amount of foam providing sufficient adhesive power.

According to the present invention, the method as referred to in the introduction is characterized in that the mixer is tubular and internally provided with packing materials which effect an intense mixing of silicate and carrier gas.

As a result of said intense mixing of silicate and carrier gas in the mixer, a strong and full foam is obtained, so that the aforesaid objectives are accomplished.

The carrier gas that can be used in the present invention is selected from a group consisting of oxygen, nitrogen, air, carbon dioxide and carbon monoxide, or a combination of one or more thereof. Preferably, air is used as the carrier gas, because such a carrier gas is available in large amounts at a low price.

The silicate compound that can be used in the present invention may be selected from the group consisting of sodium, potassium and magnesium silicates, with the possible addition of other silicate compounds that are known to those skilled in the art. Sodium silicate (water glass) is especially preferred, because it will provide a strong foam. Water glass is a member of the family of soluble sodium silicate compounds. The formula of sodium silicate varies from Na₂O₃.SiO₂ to 2 Na₂OSiO₂, depending on the amounts of water being used. Two processes are known for preparing water glass, viz. the furnace process and the hydrothermal process, which two processes are extensively described in the literature, so that they need not be explained in more detail herein.

In order to give the obtained foam additional properties, for example in order to increase the fire-resistance thereof or in order to obtain an increased adhesive power, one or more additives selected from the group consisting of surfactants, colorants, aromatics, foam stabilising agents, cleaning agents, fire resistance- increasing agents, insecticides, acids and bonding agents may be added to the silicate.

It is in particular preferable to use one or more surfactants in order to effect an intense mixing of silicates and carrier gas in the mixer, which surfactants reduce the interface tension between carrier gas and silicates, as a result of which a proper mixing of the two flows will occur.

In order to obtain a proper mixing of silicate and carrier gas, a tubular mixer is used, so that a sufficiently long residence time for effecting an intense mixing of the two components is ensured.

In addition to that, the mixer is internally provided with packing materials, which effect an intense mixing of silicate and carrier gas.

The present mixer, which is tubular as mentioned above, is provided with the carrier gas, preferably compressed air being under a pressure of about 7-8 bar, at one end thereof. Said compressed air is supplied to the mixer via a compressor provided with a reducing valve, with the amount being supplied to the mixer being controlled via a metering valve. The present mixer is provided with packing materials so that an intense contact with the silicate that is likewise being supplied to the mixer is effected. The supply of silicate preferably takes place downstream of the location where the metering of the carrier gas takes place, with the liquid silicate, to which one or more additives, preferably surfactants, may have been added, being supplied at a pressure of about 5-60 bar to the mixer via a pump provided with a frequency controller and a metering valve. The packing materials present in the interior of the mixer effect an intense mixing of silicate mixture and carrier gas, as a result of which a foam is obtained at the other end of the mixer, in which an outlet opening is present, which foam has undergone a volume increase of the order of about 5-25 times the original volume of the silicate mixture.

The present invention in particular relates to a foam with a base of carrier gas and silicate.

The use of foam silicate has a number of advantages, such as the fact that very precise metering of foam is possible and that it is possible to control the composition of the foam being formed. Moreover, a short drying time is obtained as a result of the presence of carrier gas. In addition to that, large volumes of foam can be obtained, with the storage capacity of the original silicate mixture only amounting to 1-25 of the foam silicate volume. Another important industrial advantage is the fact that the present application apparatus for paste-like or viscous raw materials can be used for the present method without any complex constructional adaptations being required.

As already mentioned before, the carrier gas for the present foam has been selected from the group consisting of oxygen, nitrogen, air, carbon dioxide and carbon monoxide, with air preferably being used as the carrier gas. Especially sodium silicate is used as the silicate compound.

In order to give the obtained foam a number of additional properties, the foam preferably contains one or more additives selected from the group consisting of surfactants, colorants, aromatics, foam stabilising agents, cleaning agents, fire resistance- increasing agents, insecticides, acids and bonding agents.

The present foam may be used as an adhesive, for example. The present foam provides many advantages, in particular when glueing on porous materials. The amount of adhesive is thus minimised, whilst the adhesive layer is nevertheless sufficiently thick to allow the adhesive to penetrate the pores of the material. If the present foam is used on impregnable materials, such as paper, cotton, non-woven materials and the like, the natural properties of silicate, with the possible addition of special additives, give such materials fire-retarding and moisture-repelling properties, without said materials becoming unmanageable, i.e. stiffer. In such an application, an essential difference between the known liquid silicate compounds and the present foam can be easily demonstrated. For example, when paper is treated with liquid silicate, as is usual in the prior art, the liquid silicate will fully penetrate the pores of the paper, after which it is no longer possible after some time to roll up the paper that has thus been treated. The paper has become stiff as a result of said treatment. The paper that has been treated with the present foam, on the other hand, will remain flexible because of the fact that the impregnated paper is not saturated with the foam material. The present applicant assumes that the foam silicate comprises small interspaces containing the carrier gas, which prevents the formation of a closed network of silicate, although the present applicant by no means wishes to be bound by such a theory.

Another application of the present foam is the use thereof as a fire retardant. Since the present foam comprises confined water molecules, an additional cooling effect will be provided in case of a fire, as a result of which the impregnated material will have a better PCS-value than in the situation in which no foam is used.

Yet another application of the present foam is the use thereof as an agent for obtaining moisture resistance. Although the use of silicate as a moisture repellent is known, for example from US patent No 5,460,864, the special use of a foam is not known therefrom. A special advantage obtained with the present foam is the fact that paper that has been treated with the foam will retain its inherent flexible characteristics, so that the treated material will not deform.

In a special embodiment it is also possible to use the present foam as a binder, for example for fibres and/or granulates, such as mineral wool plates or blankets, ceramic plates or blankets, cellulose plate material or blankets, building blocks made of peat and chipboard. An advantage of the use of foam as a binder is the small amount of energy that is required for drying the material.

The present invention will be explained hereinafter by means of an example, in which connection it is noted that the present invention is by no means limited to such a special example, but that the example is solely given by way of illustration.

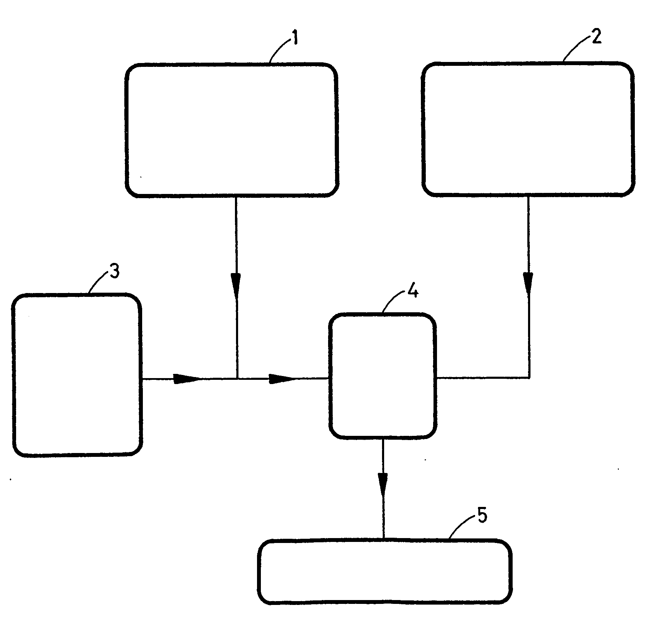

The appended Figure schematically shows the present invention.

A storage vessel 1 containing silicate (for example sodium silicate, marketed by Silmaco, Lanaken, the Netherlands) is connected to a mixer 4, to which mixer 4 also a carrier gas from the container 2 is supplied. The container 2 is a compressed air cylinder, for example. The mixer 4 is internally provided with packing materials (not shown). One or more additives from the container 3 may be added to the mixer 4. In a special embodiment it is also possible to meter one or more additives directly to the container 1, so that mixing of the additives already takes place in the container 1. For the sake of clarity, the required pumps and pressure valves, reducing valves and flow meters are not shown in the present schematic representation. The use of such equipment will be apparent to those skilled in this field of the art, however. Intense mixing of silicate and carrier gas takes place in the mixer 4, after which the foam formed in the mixer 4 is discharged to the application 5, for example as an adhesive, a fire retardant, a moisture repellent, a binder or an impregnating agent.

## Claims

1. A method of preparing a silicate-based foam, wherein silicate is supplied to a mixer under pressure, to which mixer also a carrier gas is supplied under pressure, with intense mixing of the silicate and the carrier gas being effected in the mixer, after which a foam of carrier gas and silicate is delivered via an outlet opening of the mixer, **characterized in that** the mixer is tubular and **in that** the mixer is internally provided with packing materials which effect an intense mixing of silicate and carrier gas.

2. A method according to claim 1, **characterized in that** the carrier gas is selected from a group consisting of oxygen, nitrogen, air, carbon dioxide and carbon monoxide, or a combination of one or more thereof.

3. A method according to claim 2, **characterized in that** air is used as the carrier gas.

4. A method according to any one or more of the preceding claims, **characterized in that** sodium silicate is used as the silicate.

5. A method according to any one or more of the preceding claims, **characterized in that** one or more additives selected from the group consisting of surfactants, colorants, aromatics, foam stabilising agents, cleaning agents, fire resistance-increasing agents, insecticides, acids and bonding agents are added to the silicate.

6. A method according to claim 5, **characterized in that** one or more surfactants are used.

7. A method according to any one of the preceding claims, **characterized in that** the metering of silicate takes place downstream of the location where the metering of the carrier gas takes place.

## Patentansprüche

1. Verfahren zum Herstellen eines Schaums auf Silikatbasis, bei dem das unter Druck stehende Silikat einem Mischer zugeführt wird, wobei dem Mischer außerdem ein unter Druck stehendes Trägergas zugeführt wird, wobei in dem Mischer ein intensives Mischen des Silikats und des Trägergases ausgeführt wird, woraufhin ein Schaum aus Trägergas und Silikat durch eine Auslassöffnung des Mischers ausgegeben wird, **dadurch gekennzeichnet, dass** der Mischer rohrförmig ist und dass der Mischer innen mit Packungsmaterialien versehen ist, die ein intensives Mischen von Silikat und Trägergas bewirken.

2. Verfahren nach Anspruch 1, **dadurch gekennzeichnet, dass** das Trägergas aus einer Gruppe ausgewählt ist, die aus Sauerstoff, Stickstoff, Luft, Kohlendioxid und Kohlenmonoxid oder aus einer Kombination aus einem oder mehreren dieser Komponenten besteht.

3. Verfahren nach Anspruch 2, **dadurch gekennzeichnet, dass** als Trägergas Luft verwendet wird.

4. Verfahren nach einem oder mehreren der vorhergehenden Ansprüche, **dadurch gekennzeichnet, dass** als Silikat Natriumsilikat verwendet wird.

5. Verfahren nach einem oder mehreren der vorhergehenden Ansprüche, **dadurch gekennzeichnet, dass** ein oder mehrere Additive, die aus der Gruppe ausgewählt sind, die aus Tensiden, Farbstoffen, Aromaten, Schaumstabilisierungsmitteln, Reinigungsmitteln, Feuerbeständigkeitserhöhungsmitteln, Insektiziden, Säuren und Haftmitteln besteht, zu dem Silikat hinzugefügt werden.

6. Verfahren nach Anspruch 5, **dadurch gekennzeichnet, dass** ein oder mehrere Tenside verwendet werden.

7. Verfahren nach einem der vorhergehenden Ansprüche, **dadurch gekennzeichnet, dass** die Dosierung von Silikat stromabseitig von dem Ort erfolgt, an dem die Dosierung des Trägergases erfolgt.

## Revendications

1. Procédé pour préparer une mousse à base de silicate, dans lequel un silicate est délivré à un mélangeur sous pression, mélangeur auquel est également délivré un gaz porteur sous pression, un mélange intense du silicate et du gaz porteur étant effectué dans le mélangeur, après quoi une mousse de gaz porteur et de silicate est délivrée via une ouverture de sortie du mélangeur, **caractérisé en ce que** le mélangeur est tubulaire et **en ce que** le mélangeur est pourvu en interne de matériaux de garnissage qui effectuent un mélange intense du silicate et du gaz porteur.

2. Procédé selon la revendication 1, **caractérisé en ce que** le gaz porteur est choisi dans le groupe constitué par l'oxygène, l'azote, l'air, le dioxyde de carbone et le monoxyde de carbone, ou une combinaison d'un ou plusieurs de ceux-ci.

3. Procédé selon la revendication 2, **caractérisé en ce que** le gaz porteur utilisé est l'air.

4. Procédé selon l'une quelconque ou plusieurs des revendications précédentes, **caractérisé en ce que** le silicate utilisé est le silicate de sodium.

5. Procédé selon l'une quelconque ou plusieurs des revendications précédentes, **caractérisé en ce qu'**un ou plusieurs additifs choisis dans le groupe constitué par les tensioactifs, les colorants, les aromatiques, les agents stabilisateurs de mousse, les agents nettoyants, les agents augmentant la résistance au feu, les insecticides, les acides et les agents liants, sont ajoutés au silicate.

6. Procédé selon la revendication 5, **caractérisé en ce qu'**un ou plusieurs tensioactifs sont utilisés.

7. Procédé selon l'une quelconque ou plusieurs des revendications précédentes, **caractérisé en ce que** le dosage du silicate a lieu en aval de l'emplacement où a lieu le dosage du gaz porteur.
